(19) Europäisches Patentamt
European Patent Office
Office européen des brevets

(11) **EP 3 008 427 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **14724755.5**

(22) Anmeldetag: **19.05.2014**

(51) Int Cl.:
*G01F 1/66* $^{(2006.01)}$     *G01F 25/00* $^{(2006.01)}$

(86) Internationale Anmeldenummer:
**PCT/EP2014/060188**

(87) Internationale Veröffentlichungsnummer:
**WO 2014/198492 (18.12.2014 Gazette 2014/51)**

(54) **VERFAHREN ZUR ERMITTLUNG EINES KOMPENSIERTEN DURCHFLUSSES UND/ODER EINER KOMPENSIERTEN STRÖMUNGSGESCHWINDIGKEIT UND ULTRASCHALL-DURCHFLUSSMESSGERÄT**

METHOD FOR ASCERTAINING A COMPENSATED FLOW AND/OR A COMPENSATED FLOW SPEED AND ULTRASONIC FLOW MEASURING DEVICE

PROCÉDÉ DE DÉTERMINATION D'UN DÉBIT COMPENSÉ ET/OU D'UNE VITESSE D'ÉCOULEMENT COMPENSÉE ET DÉBITMÈTRE À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2013 DE 102013106108**

(43) Veröffentlichungstag der Anmeldung:
**20.04.2016 Patentblatt 2016/16**

(73) Patentinhaber: **Endress+Hauser Flowtec AG**
**4153 Reinach (BL) (CH)**

(72) Erfinder:
• FRÖHLICH, Thomas
  CH-4142 Münchenstein (CH)
• BERBERIG, Oliver
  79639 Grenzach-Wyhlen (DE)
• KISSLING, Beat
  CH-4153 Reinach (CH)
• MÜLLER, Quirin
  Bättwil (CH)
• BUSSINGER, Klaus
  4147 Aesch (CH)

(74) Vertreter: **Andres, Angelika Maria**
**Endress+Hauser (Deutschland) AG+Co. KG**
**PatServe**
**Colmarer Strasse 6**
**79576 Weil am Rhein (DE)**

(56) Entgegenhaltungen:
EP-A1- 2 228 631       WO-A2-01/49182
DE-A1- 19 717 940      US-A1- 2003 131 667
US-A1- 2009 055 119

• HOLM M ET AL: "Simulation of flow meter calibration factors for various installation effects", MEASUREMENT, INSTITUTE OF MEASUREMENT AND CONTROL. LONDON, GB, Bd. 15, Nr. 4, 1. Juli 1995 (1995-07-01), Seiten 235-244, XP004040409, ISSN: 0263-2241, DOI: 10.1016/0263-2241(95)00007-8

**Beschreibung**

Die vorliegende Erfindung betrifft ein Verfahren zur Ermittlung eines kompensierten Durchflusses und/oder einer kompensierten Strömungsgeschwindigkeit, wobei die Kompensation eines strömungstechnisch bedingten Messfehlers bei einer Durchflussmessung eines Ultraschall-Durchflussmessgerätes nach dem Oberbegriff des Anspruchs 1 erfolgt. Die vorliegende Erfindung betrifft zudem ein Ultraschall-Durchflussmessgerät nach dem Oberbegriff des Anspruchs 12.

Es sind Kalibrationsverfahren bekannt, welche den Typ einer Störung, den Abstand zur Störung und die Kenntnis zum Erreichen eines vollausgebildeten Strömungsprofils heranziehen. Ein entsprechenden Verfahren wird in der US 2009/055119 A1 vorgestellt. Infolge dessen wird ein Durchflussmessgerät bereitgestellt, welches auf eine bestimmte Strömungssituation hin werkseitig vorkonditioniert ist. Das heißt dieses Durchflussmessgerät ist auf eine ganz bestimmte Strömungssituation eingestellt und liefert in dieser Situation eine hochgenaue Messung. Sobald sich die Strömungssituation ändert, also der Störungstyp und/oder der Abstand zur Störung, so ändert sich das Strömungsprofil, so dass das Messgerät fehlerhaft arbeitet. Daher ist das Gerät nur für die Situation einsetzbar, für das es werkseitig kalibriert wurde.

Die DE 197 17 940 A1 beschreibt die Korrektur einer Wirbelintensität. Neben der Wirbelintensität wird auch ein Verhältnis zwischen Longitudinalimpuls und Drehimpuls im Medium berücksichtigt. Eine Strömungsprofilassymetrie wird hierbei nicht korrigiert. Somit ist dieses Korrekturverfahren auf bestimmte Strömungsprofilstörungen, nämlich Wirbel, beschränkt.

Die US20090055119A1 offenbart ein Verfahren zur Kalibration eines Durchflussmessgeräts zur Messung des Durchflusses eines Mediums durch ein Messrohr, wobei eine Rohrleitungskonfiguration auf der stromaufwärts gerichteten Seite des Messgeräts berücksichtigt wird, und wobei der Abstand des Durchflussmessgeräts von der Rohrleitungskonfiguration definiert und die Strecke, die das Strömungsprofil benötigt, um ein voll entwickeltes Strömungsprofil auszubilden bestimmt wird.

Die US 2003/0131667 A1 beschreibt ein Verfahren zur Kompensation von Strömungsprofilassymetrien und Wirbeln mit Hilfe von Strömungskonditioniereinrichtungen. Die Strömungskonditioniereinrichtungen z.B. Rohrbündelgleichrichter und/oder Lochplatten sorgen dafür, dass an der Stelle der Ultraschalldurchflussmessung definierte Strömungsverhältnisse herrschen. Damit wird ein definiertes und genaues Durchflussmessen ermöglicht, jedoch geht dies zu Lasten von hohen Druckverlusten und der Verblockung des Strömungsquerschnittes. Dadurch ist z.B. eine Wartung der Rohrleitung mittels Molch unmöglich. Aufgrund der Druckverluste wird auch eine deutlich höhere Pumpenleistung benötigt. Der Nutzer wird gezwungen, insbesondere im Vergleich zu Clamp-On Durchflussmessgeräten, die Rohrleitung zu öffnen und die Strömungskonditionierer einzubauen.

Die US 5 987 997 A beschreibt ein Verfahren zur Reynoldszahlermittlung mittels Vergleich von Strömungsgeschwindigkeiten entlang fünf unterschiedlicher Messpfade und die Korrektur des Strömungsprofils anhand der ermittelten Werte. Insbesondere müssen diese Messpfade in einer bestimmten Art und Weise über den Messquerschnitt verteilt sein, da ein unterschiedlicher radialer Abstand der Messpfade benötigt wird. Dieses Verfahren beruht auf der Ermittlung der Geschwindigkeitsverhältnisse dieser Messpfade zueinander. Dies ist bei diesem Verfahren essentiell.

Die zwischenveröffentlichte WO 2013/164805 A1 offenbart ein Ultraschall-Durchflussmessverfahren, welches beliebige Strömungsstörungen korrigiert und welches den Strömungstyp, die Position und Orientierungsangaben des Wandlerpaares benötigt. Dadurch wird ein hoher Kalibrieraufwand benötigt, da sich die Gesamtheit der Korrektur aus drei unabhängigen Parametern zusammensetzt. Gerade die Orientierungsangaben sind bei einem Einpfadsystem essentiell um eine verlässliche Korrektur durchführen zu können. Bereits geringe Abweichungen können hier zu einem großen Fehler führen. Daher sind Einzelmessungen mit sehr kleiner Winkeländerung bzw. Schrittweite erforderlich, um eine hinreichend genaue und flexible Korrektur zu ermöglichen. In einigen Fällen ist es dem Anwender nicht per se möglich eine genaue Orientierungsangabe zur Störung zu geben, da die Störung komplexer Natur sein kann oder unbekannt ist und die Positionierung der Wandler zur Störung daher nicht genau angegeben werden kann.

Die EP 2 228 631 A1 offenbart mindestens eine spezielle Zweipfad-Eintraversenanordnung von Ultraschall-Durchflussmesswandlern, mit der Messabweichungen bei niedrigen Reynolds-Zahlen kompensiert werden können. Die Ultraschallwandler werden so an das Rohr angebracht, dass die jeweils durch ein Ultraschallwandlerpaar gebildeten Messpfade weder die Messrohrachse noch sich gegenseitig schneiden. Es konnte gezeigt werden, dass aufgrund der speziellen Anordnung beim Summieren der Durchflussmesswerte sich die Messabweichungen der einzelnen Messungen gegenseitig kompensieren. Für diese Anordnung sind jedoch individualisierte Messrohre notwendig, wodurch diese spezielle Anordnungsgeometrie für Clamp-On-Ultraschall-Durchflussmessgeräte nicht geeignet ist.

Die WO 01/49182 A2 lehrt ein Verfahren zur Kompensation von Messfehlern, die aufgrund einer Verschiebung eines Ultraschallwandlers auftreten, was sich auf den Winkel zwischen Signalpfad und Strömungsrichtung auswirkt. Dieser wird jedoch zumeist für die Bestimmung des Durchflusses als konstant angenommen. Dieses Verfahren ist besonders für Anwendungen geeignet, bei denen die Positionen der Ultraschallwandler nicht mehr korrigiert werden können, beispielsweise bei medizinischen Anwendungen, wie der Bestimmung der Durchflussgeschwindigkeit von Blut durch Blutadern im Körper. Eine Änderung des Winkels wird im Wesentlichen dadurch erkannt, dass zwei Durchflusswerte, welche mittels zweier unterschiedlicher Ultraschallwandlerpaare ermittelt werden, voneinander abweichen. Ausgehend vom Verhältnis der beiden Durchflusswerte wird ein Kompensationsfaktor bestimmt und für die Bestimmung eines korrigierten Durchflusswertes berücksichtigt. Es wird angenommen, dass das Verhältnis strömungsunabhängig ist und sich nur dann ändert, wenn die Position der Ultraschallwandler variiert. Somit eignet sich das Verfahren nicht für die Kompensation von winkelabhängigen Messfehlern, die auftreten, wenn eine durch eine Störung hervorgerufene Asymmetrie im Strömungsprofil vorliegt.

Es sind Clamp-On Ultraschall-Durchflussmessgeräte bekannt, welche nach mittels einer sogenannten Zweipfad-Anordnung arbeiten. Diese Messung erfolgt über zwei oder mehr Ultraschallwandler-Paare. Diese Anordnung hat den Vorteil, dass Messungenauigkeiten bei nicht vollständig symmetrisch, insbesondere nicht vollständig rotationssymmetrisch, ausgebildeten Strömungsprofilen teilweise kompensierbar sind. Störungsverursachend für derartige Störungen sind veränderliche Querschnitte, Abzweige, Strömungsumlenkungen und Bauteile, welche an eine Rohrleitung angeschlossen werden und nachfolgend Bestandteil eines Rohres bzw. als Rohrelement definiert sind. Dies betrifft u.a. Krümmer, Ventile oder auch Pumpen.

Je nach Typ der Störung wird empfohlen einen gewissen Mindestabstand bei der Anordnung der Ultraschallwandler um das Rohr herum einzuhalten, da andernfalls eine gerätespezifische Obergrenze für die Messgenauigkeit nicht mehr gewährleistet werden kann.

Es sind allerdings Anwendungen bekannt, in welchen dieser Mindestabstand, die sog. Einlaufstrecke, nicht eingehalten werden kann. Bei derartigen Anwendungen treten große Messfehler durch das nicht vollausgebildete Strömungsprofil auf. In diesem Fall hat der Kunde allerdings auch keine Information bezüglich der Genauigkeit und Zuverlässigkeit der Messung, mit welchen er die Qualität der ermittelten Informationen einschätzen und bewerten kann.

Es ist daher Aufgabe der vorliegenden Erfindung dem Kunden eine Möglichkeit der Einschätzung von Messungenauigkeiten bzw. Messfehlern bei der Anordnung von Ultraschallwandlern an Rohraufbauten mit kurzen Einlaufstrecken zu gewährleisten sowie die Messunsicherheiten durch eine Korrektur zu minimieren.

Die Erfindung löst diese Aufgabe durch ein Verfahren mit den Merkmalen des Anspruchs 1 und durch das Bereitstellen eines Ultraschall-Durchflussmessgerätes mit den Merkmalen des Anspruchs 12. Vorteilhafte Ausgestaltungen sind Gegenstand der Unteransprüche.

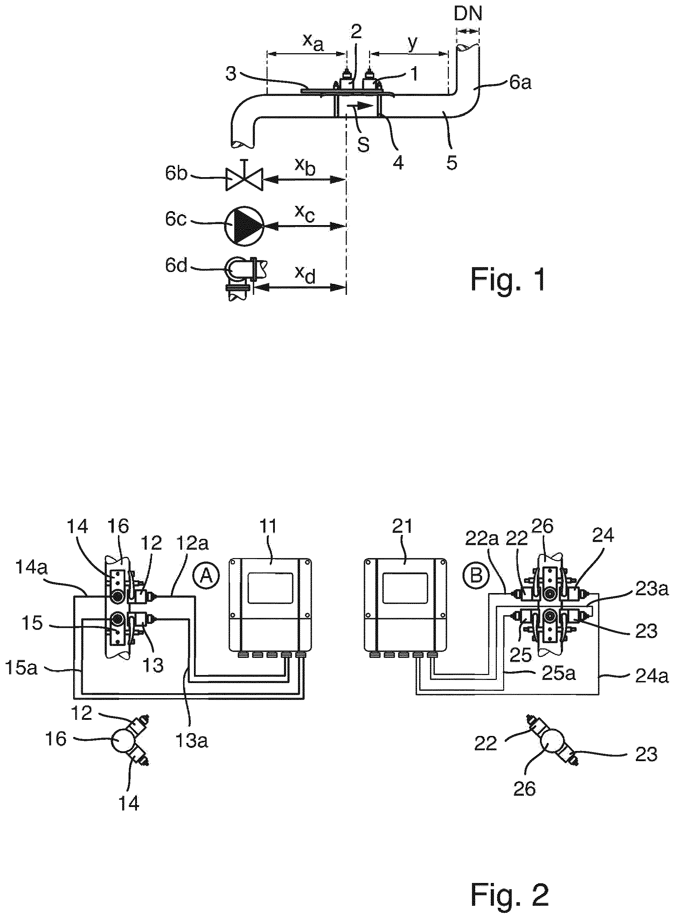

Eine 180°-Eintraversenanordnung bedeutet erfindungsgemäß, wie in Fig. 2 Variante B ersichtlich, die Anordnung von zwei Ultraschallwandlerpaaren in einer Ebene, die direkt und überkreuz Ultraschallsignale senden und empfangen. Dies entspricht in Variante B der Fig. 2 den Transducern 22 und 23 als erstes Transducerpaar und den Transducern 24 und 25 als zweites Transducerpaar.

Eine 90°-Zweitraversenanordnung bedeutet erfindungsgemäß, wie in Fig. 2 Variante A ersichtlich, die Anordnung von zwei Ultraschallwandlerpaaren in zwei rechtwinklig zueinander stehenden Ebenen, wobei die Ultraschallsignale über *eine* Reflexion an der Rohrinnenwand gesendet und empfangen werden. Dies entspricht in Variante A der Fig. 2 den Transducern 12 und 13 als erstes Transducerpaar und den Transducern 14 und 15 als zweites Transducerpaar.

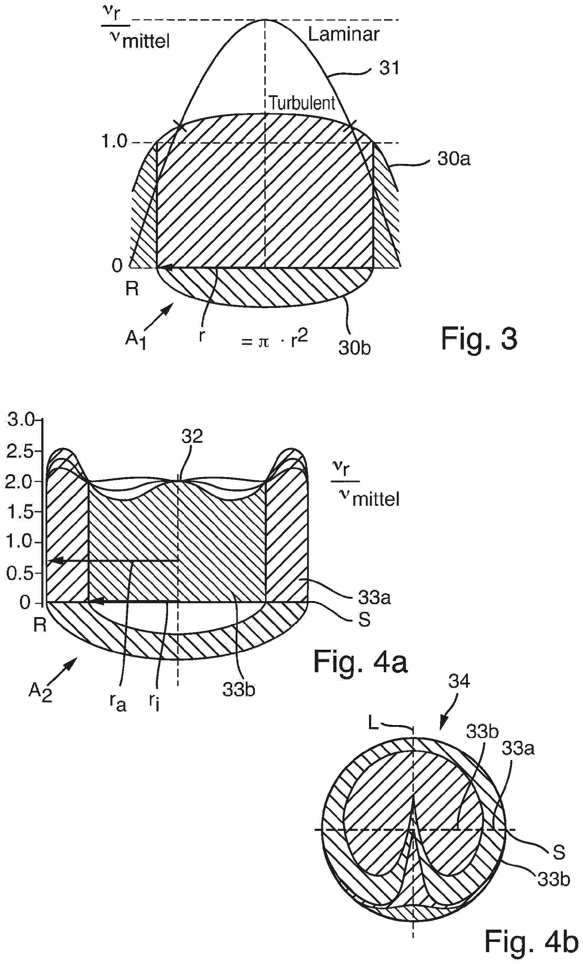

Es handelt sich um eine Zweipfadmessung mit erfindungsgemäß zwei oder ggf. auch mehr Ultraschallwandlerpaaren, da bei der Ermittlung eines Korrekturfaktors mit nur einem Ultraschallwandlerpaar stets auf die Winkellage - also die Positionierung des Ultraschallwandlerpaars am Umfang des Rohres - geachtet werden muss. Diese Abhängigkeit kann man u.a. auch aus Fig. 4 erkennen. Durch die Einbeziehung dieses Korrekturfaktors in die Ermittlung des Durchflusses und/oder der Strömungsgeschwindigkeit erfolgt eine Kompensation des strömungstechnisch bedingten Messfehlers.

Das Verfahren kann direkt am Durchflussmessgerät oder als Computersimulation durchgeführt werden.

In einem Schritt a) erfolgt das Einspeisen von Informationen bezüglich der Art eines störungsverursachenden Rohrelements. Die Art des störungsverursachenden Rohrelements kann durch eine Auswahl vorgegeben werden.

In Schritt b) erfolgt das Einspeisen von Informationen bezüglich des Abstandes der Anordnung des Ultraschallwandlerpaares oder der Ultraschallwandlerpaare von dem störungsverursachenden Rohrelement. Dies kann durch aktive Messung, z.B. Lasermessung erfolgen, wobei das Messgerät den Abstand direkt an das Durchflussmessgerät überträgt. Es kann aber auch durch manuelle Eingabe erfolgen.

In Schritt c) wird der Korrekturfaktor ermittelt. Dabei wird auf Daten zurückgegriffen, welche z.B. durch Messreihen und/oder Simulationsverfahren in Abhängigkeit der unter Schritt a) und b) verwendeten Informationen ermittelt wurden. Dabei kann bei Zwischenwerten eine Approximierung erfolgen.

In Schritt d) erfolgt die Ermittlung des kompensierten Messwertes des Durchflusses und/oder der Strömungsgeschwindigkeit. Dieser kompensierte Wert kann im Anschluss ausgegeben werden.

Die 180°-Eintraversenanordnung oder eine 90°-Zweitraversenanordnung wird für die Ermittlung des Korrekturfaktors $k_D$, insbesondere als Montageanordnung, genutzt. Dabei beschränkt sich die Nutzung vorzugsweise auf die Verwendung der Montageanordnung, so dass eine genaue Ermittlung oder Berücksichtigung der Orientierung zwischen Störung und Messpfadausrichtung unnötig wird.

Grundsätzlich kann bereits die Angabe des Korrekturfaktors dem Kunden eine Information bezüglich der Ungenauigkeit der Messung liefern. Es ist allerdings von Vorteil, wenn eine Berechnung eines korrigierten Volumenstromes in Abhängigkeit vom Korrekturfaktor $k_D$ erfolgt.

Zusätzlich kann die Ermittlung einer maximalen Schwankungsbreite des messfehlerabhängigen Korrekturfaktors $k_D$ erfolgen. Falls der Messfehler im Mittelwert 5% beträgt, so kann er noch eine zusätzliche Standardabweichung von beispielsweise 1% aufweisen. Diese Genauigkeitsangabe kann z.B. in der Spezifikation des Messgerätes angegeben werden.

Es ist zudem von Vorteil, wenn ein Einspeisen von Informationen bezüglich Reynoldszahl und/oder kinematischen Viskosität eines zu messenden Mediums in die Auswerteeinheit und/oder Computer erfolgt, wobei diese Informationen bei der Ermittlung des messfehlerabhängigen Korrekturfaktors $k_D$ mit eingehen.

Die Abhängigkeit der Messpfadwinkellage zur Strömungsstörung wird bei Verwendung von zwei oder ggf. mehr Ultraschallwandlerpaaren durch die Messergebnisse des oder der weiteren Ultraschallwandlerpaare kompensiert.

In einer bevorzugten Ausführungsvariante der Erfindung werden zur Ermittlung des Korrekturfaktors $k_D$ ausschließlich die Art des strömungsbeeinflussenden Rohrelements und der Abstand der Anordnung der Ultraschallwandlerpaare (12-15, 22-25) von dem strömungsbeeinflussenden Rohrelement (6a-6d) sowie optional die Informationen bezüglich der Reynoldszahl und/oder der kinematischen Viskosität eines zu messenden Mediums herangezogen. Das heißt es, werden maximal zwei zwingend vorgeschriebene Korrekturgrößen und zwei optionale Korrekturgrößen genutzt.

Weitere Korrekturgrößen - insbesondere eine Kenntnis hinsichtlich der Orientierung der Ultraschallwandlerpaare (12-15, 22-25) zur Störung - werden nicht benötigt.

Zusätzlich kann ein Einspeisen von Informationen erfolgen bezüglich der Anordnung der Ultraschallwandlerpaare zueinander am Rohrelement, insbesondere Informationen hinsichtlich des Winkels der Ultraschallpaare zueinander, wobei der Scheitelpunkt des Winkels auf der Rohrachse angeordnet ist und/oder Informationen hinsichtlich der Anzahl der Traversen eines Ultraschallsignals zwischen den Ultraschallwandlern eines Ultraschallwandlerpaares, erfolgt, wobei diese Informationen bei der Ermittlung des messfehlerabhängigen Korrekturfaktors $k_D$ mit eingehen. Dadurch kann die Messfehlerschwankung reduziert werden.

Die Ermittlung des messfehlerabhängigen Korrekturfaktors $k_D$ kann vorteilhaft durch einen Simulationsalgorithmus, beispielsweise in Form von Strömungssimulationsberechnungen, erfolgen. Dies reduziert den Zeitaufwand, welcher beispielsweise bei Vergleichsmessungen anfällt, signifikant.

Alternativ oder zusätzlich kann die Ermittlung des messfehlerabhängigen Korrekturfaktors $k_D$ durch Vergleich der eingespeisten Informationen mit Messreihen erfolgen, welche auf einem Datenspeicher des Ultraschall-Durchflussmessgerätes oder in einem angeschlossenen Computer hinterlegt sind, oder welche von einem Server abrufbar sind. Dies hat den Vorteil, dass eine möglichst anwendungsnahe Approximation erfolgen kann. Der vorgenannte Vergleich kann vorteilhaft eine Interpolation an die Messreihen umfassen, sofern die in den Messreihen hinterlegten Messbedingungen nicht vollständig mit den eingespeisten Informationen korrelieren. Dadurch können auch Zwischenwerte besser an die Realbedingungen angepasst werden.

Die Art des störungsverursachenden Rohrelements ist vorteilhaft ausgesucht aus der folgenden Gruppe: winkelförmige Rohrkrümmer, insbesondere 90° Krümmer oder Raumkrümmer, Abzweige, Pumpen, Sensorelemente, Ventile, Verjüngungen und/oder Rohrerweiterungen.

Erfindungsgemäß weist ein Clamp-On-Ultraschall-Durchflussmessgerät eine Auswerteeinheit auf und ist dadurch gekennzeichnet dass zwei Ultraschallwandlerpaare an einem Rohr angeordnet sind und eine 180°-Zweipfad-Eintraversenanordnung oder eine 90°-Zweipfad-Zweitraversenanordnung einnehmen, und dass die Auswerteeinheit ausgebildet ist zur Ermittlung des kompensierten Durchflusses und/oder einer korrigierten Strömungsgeschwindigkeit mittels des erfindungsgemäßen Verfahrens.

Dieser Korrekturfaktor kann bei der Anzeige der Messergebnisse mit angezeigt werden und dient zur Kompensation des Messwertes.

Das Ultraschall-Durchflussmessgerät ist als Clamp-On Ultraschall-Durchflussmessgerät ausgebildet. Dies ermöglicht eine sehr einfache und auf die Strömung rückwirkungsfreie Anordnung des Messgerätes im Bereich der Strömung mit dem gestörten Strömungsprofil und ermöglicht zudem eine Ausrichtung und Montage der Ultraschallwandler ohne Unterbrechung der Strömung bzw. des Prozesses während der Installation des Messgerätes.

Die Ultraschallwandler sind erfindungsgemäß derart um das Rohr angeordnet sind, dass die Ultraschallwandler eine 180°-Zweipfad-Eintraversen oder eine 90°-Zweipfad-Zweitraversenanordnung einnehmen.

Bevorzugte Ausführungsvarianten der Erfindung werden nachfolgend in den Figuren näher erläutert. Sie zeigen:

Fig.1    Schematische Darstellung einer Clamp-On Variante eines Ultraschalldurchfluss-messgerätes hinter unterschiedlichen Strömungsstörungen;

Fig.2    Schematische Darstellung von zwei Varianten einer Clamp-On Zweipfadmessung inklusive Verkabelung und Auswerteeinheit;

Fig.3     Darstellung eines vollständig symmetrisch ausgebildeten laminaren und turbulenten Strömungsprofils in axialer Richtung;

Fig.4a    Darstellung eines gestörten Strömungsprofils nach einer Störung durch einen 90° Krümmer in axialer Richtung;

Fig.4b    Darstellung der Geschwindigkeitsverteilung hinter einem 90° Krümmer, im Querschnitt 5*D hinter dem Krümmer;

Fig.5     Messkurven von zwei einzelnen, nicht miteinander verrechneten Zweitraversenanordnungen von Ultraschallwandlerpaaren bei fortschreitendem Versatz der Winkellage um 30° nach 40 DN gerader Messstrecke;

Fig.6     Messkurve einer Einpfad-Eintraversenanordnung und einer 180°-Zweipfad-Eintraversenanordnung bei fortschreitendem Versatz der Winkellage um 30° bei einem Abstand von 5 DN hinter einem 90°Krümmer;

Fig.7     Messkurve einer Einpfad-Eintraversenanordnung und einer 180°-Zweipfad-Eintraversenanordnung bei fortschreitendem Versatz der Winkellage um 30° bei einem Abstand von 5 DN hinter einem 2*90°-Raumkrümmer;

Fig.8     Messkurve einer Einpfad-Zweitraversenanordnung und einer 90°-Zweipfad-Zweitraversenanordnung bei fortschreitendem Versatz der Winkellage um 30° bei einem Abstand von 5 DN hinter einem 90°-Krümmer;

Fig.9     Messkurve einer Einpfad-Zweitraversenanordnung und einer 90°-Zweipfad-Zweitraversenanordnung bei fortschreitendem Versatz der Winkellage um 30° bei einem Abstand von 5 DN hinter einem 2*90°-Raumkrümmer;

Fig.10    Diagramm des über alle Orientierungswinkel gemittelten Messfehlers über den Abstand von der Störung, bei einer 90°-Zweipfad-Zweitraversenanordnung (45) und bei einer 180°-Zweipfad-Eintraversenanordnung;

Fig.11    Diagramm der über alle Orientierungswinkel gemittelten Messfehlerstreuung über den Abstand von der Störung, bei einer 90°-Zweipfad-Zweitraversenanordnung und bei einer 180°-Zweipfad-Eintraversenanordnung; und

Fig.12    Flussdiagramm bezüglich Eingabeparameter für ein Computerprogrammprodukt.

Ultraschall-Durchflussmessgeräte werden vielfach in der Prozess- und Automatisierungstechnik eingesetzt. Sie erlauben in einfacher Weise, den Volumendurchfluss und/oder Massendurchfluss in einer Rohrleitung zu bestimmen. Die bekannten Ultraschall-Durchflussmessgeräte arbeiten häufig nach dem Laufzeitdifferenz Prinzip. Beim Laufzeitdifferenz-Prinzip werden die unterschiedlichen Laufzeiten von Ultraschallwellen, insbesondere Ultraschallimpulsen, so genannten Bursts, relativ zur Strömungsrichtung der Flüssigkeit ausgewertet. Hierzu werden Ultraschallimpulse in einem bestimmten Winkel zur Rohrachse sowohl mit als auch entgegen der Strömung gesendet. Da die Ausbreitungsgeschwindigkeit der Schallwellen gegen die Durchflussrichtung geringer ist als in Durchflussrichtung, entsteht eine Laufzeitdifferenz. Diese Laufzeitdifferenz ist direkt proportional zur Durchflussgeschwindigkeit. Aus der Laufzeitdifferenz lässt sich die Fliessgeschwindigkeit und damit bei bekanntem Durchmesser des Rohrleitungsabschnitts der Volumendurchfluss bestimmen.

Die Signale werden bidirektional gesendet, d.h. ein jeweiliger Ultraschallwandler arbeitet sowohl als Schallgeber als auch als Schallempfänger.

Die Ultraschallwellen werden mit Hilfe so genannter Ultraschallwandler erzeugt bzw. empfangen. Hierfür sind Ultraschallwandler in der Rohrwandung des betreffenden Rohrleitungsabschnitts fest angebracht. Es sind auch Clamp-On-Ultraschall-Durchflussmesssysteme erhältlich. Bei diesen Systemen werden die Ultraschallwandler von ausserhalb des Messrohrs an dessen Rohrwand gepresst. Ein großer Vorteil von Clamp-On-Ultraschall-Durchflussmesssystemen ist, dass sie das Messmedium nicht berühren und auf eine bereits bestehende Rohrleitung angebracht werden.

Die Ultraschallwandler bestehen normalerweise aus einem elektromechanischen Wandlerelement, z.B. ein piezoelektrisches Element, und einer Koppelschicht. Im elektromechanischen Wandlerelement werden die Ultraschallwellen als akustische Signale erzeugt und über die Koppelschicht zur Rohrwandung geführt und von dort in die Flüssigkeit geleitet, bei Clamp-On-Systemen, oder sie werden bei Inline-Systemen über die Koppelschicht in das Messmedium eingekoppelt. Dann wird die Koppelschicht auch seltener Membran genannt.

Zwischen dem piezoelektrischen Element und der Koppelschicht kann eine weitere Koppelschicht angeordnet sein, eine so genannte Anpassungsschicht. Die Anpassungsschicht übernimmt dabei die Funktion der Transmission des Ultraschallsignals und gleichzeitig die Reduktion einer durch unterschiedliche akustische Impedanzen verursachte Reflexion an Grenzschichten zwischen zwei Materialen.

Die Ultraschallwandler können unterschiedlich angeordnet werden. Bei einer Montage für eine Messung über eine Traverse befinden sich die Ultraschallwandler auf gegenüberliegenden Seiten der Rohrleitung.

Bei einer Montage für eine Messung über zwei Traversen befinden sich die Ultraschallwandler auf der gleichen Seite der Rohrleitung.

Grundsätzlich erfolgt die Berechnung des Volumendurchflusses bei bekannter Laufzeitdifferenz bei einem einzigen Ultraschallwandlerpaar mit den Ultraschallwandlern a und b nach folgender Formel:

$$Q = v * A$$

,wobei gilt:

Q = Volumendurchfluss,
v = Durchflussgeschwindigkeit des Mediums und
A = Rohrquerschnitt

$$v \sim \Delta t,$$

und

$$\Delta t = t_a - t_b$$

Wobei $t_a$ die Laufzeit zwischen Ultraschallwandler a und b symbolisiert und $t_b$ die Laufzeit zwischen Ultraschallwandler b und a symbolisiert.

Eine Ultraschallmessstelle kann in einem sogenannten Zweikanal-Messbetrieb betrieben werden. Ein Messumformer bzw. eine Auswerteeinheit besitzt die Möglichkeit zwei voneinander unabhängige Messkanäle (Messkanal 1 und Messkanal 2) zu betreiben. Pro Messkanal wird ein Ultraschallwandlerpaar angeschlossen. Beide Messkanäle arbeiten unabhängig voneinander und werden von der Auswerteeinheit gleichermaßen unterstützt. Dieser Zweikanal-Messbetrieb kann für folgende Messungen eingesetzt werden:

- Zweikanal-Messung = Durchflussmessung an zwei separaten Messstellen
- Zweipfad-Messung = Redundante Durchflussmessung an einer Messstelle

Nachfolgend wird die Zweipfadmessung näher erörtert:

Bei der Zweipfad-Messung wird der Durchfluss redundant an einer Messstelle erfasst.

Die Messwerte der beiden Messkanäle können unterschiedlich verarbeitet und dargestellt werden.

Folgende Messwertausgaben bieten sich vorzugsweise für eine Zweipfad-Messung an:

- Ausgabe der einzelnen Messwerte pro Messkanal (unabhängig voneinander)
- Ausgabe des Mittelwerts beider Messwerte

Mit der Funktion "Mittelwertbildung" erhalten Sie in der Regel einen stabileren Messwert. Die Funktion eignet sich daher für Messungen unter nicht idealen Bedingungen (z.B. kurzen Einlaufstrecken).

Die Konfiguration der beiden Messkanäle kann individuell erfolgen. Dies ermöglicht für jeden Messkanal eine unabhängige Einstellung und Auswahl der Anzeige, der Ausgänge, des Messaufnehmertyps und der Installationsart. Bei der Zweipfad-Messung ist eine individuelle Konfiguration der beiden Messkanäle in der Regel nicht notwendig. In bestimmten Fällen kann sie jedoch zum Ausgleichen applikationsspezifischer Asymmetrien genutzt werden.

In Fig. 1 sind verschiedene Möglichkeiten dargestellt, wie applikationsspezifische Asymmetrien entstehen können.

Fig. 1 zeigt ausschnittsweise ein Clamp-On Ultraschall-Durchflussmessgerät in einer sogenannten zwei-Traversenanordnung zweier Ultraschallwandler 1 und 2 an einem Rohr 5 mit festgelegter Nennweite DN. Bei einer derartigen Anordnung tritt ein vom ersten Ultraschallwandler 1 gesendetes Ultraschallsignal über die Rohrwandung ins Medium ein, wird auf der gegenüberliegenden Seite am Innenrohr reflektiert und wird anschließend von einem zweiten Ultraschallwandler empfangen. Dabei sind beide Ultraschallwandler nebeneinander auf der Messrohrwandung angeordnet, also auf derselben Gerade, die parallel zur Rohrachse verläuft.

Die Ultraschallwandler 1 und 2 sind im vorliegenden Ausführungsbeispiel in an sich bekannter Weise über einen oder mehrere Kopplungsadapter 3 mittels von Metallbänder 4 festgelegt.

Die Krümmung 6a - hier eine 90° Rohrkrümmung - stellt eine Störung des Strömungsprofils dar, welche eine Asymmetrie im Strömungsprofil ausbildet, welche im Detail in den Fig. 4a und 4b dargestellt ist und im Zusammenhang mit dieser Figur näher erläutert wird. Sofern nachfolgend eine Störung diskutiert wird, so ist damit eine Störung des Strömungsprofils gemeint.

Weitere Rohrelemente, welche Störungen hervorrufen können sind in Fig. 1 dargestellt. Dabei handelt es sich um Ventile 6b, Pumpen 6c und anderweitige Krümmungen 6d oder ggf. auch Reduzierstücken. Die Liste der störungsursächlichen Rohrelemente bzw. Bauteile ist selbstverständlich nicht abschließend.

Die Strecken $x_{a-d}$ und y definieren empfohlene Abstände, in denen die Clamp-On Ultraschallwandler 1 und 2 von den entsprechenden Störungen am Rohr 5 angeordnet sein sollten.

Diese Abstände sind Mindestabstände und richten sich nach der Art der Störung. So wird für $x_a$ und $x_d$ ein Mindestabstand von 15*DN, also der 15-fachen Nennweite von der Störung weg in Strömungsrichtung S empfohlen. Für $x_b$ und $x_c$ wird ein Mindestabstand von 20*DN von der Störung empfohlen. Der Mindestabstand y - sofern die Störung also hinter den Ultraschallwandlern in Strömungsrichtung S erzeugt wird - beträgt vorzugsweise etwa 3*DN.

Fig. 2 zeigt ein Clamp-On Ultraschall-Durchflussmessgerät in zwei an-sich bekannten Zweipfadanordnungen.

Variante A beschreibt eine Zweipfad-Zweitraversen Anordnung. Das Ultraschall-Durchflussmessgerät weist eine Auswerteeinheit 11 auf, an welche zwei Ultraschallwandler-Paare umfassend die Ultraschallwandler 12, 13 und 14, 15 angeschlossen sind. Diese sind über die Leitungen 12a, 13a und 14a, 15a mit der Auswerteeinheit verbunden.

Die Ultraschallwandler 12, 13 eines ersten Ultraschallwandlerpaares sind nebeneinander auf einer Geraden auf dem Rohrumfang des Rohres 16 angeordnet, wobei die Gerade parallel zur Rohrachse verläuft.

Die Ultraschallwandler 14 und 15 eines zweiten Ultraschallwandlerpaares sind umfangsverteilt zum ersten Ultraschallwandlerpaar angeordnet. Dabei erfolgt die umfangsverteilte Anordnung des zweiten Ultraschallpaares vorzugsweise in einem 90°-Winkel zum ersten Ultraschallpaar, wobei der Scheitelpunkt des Winkels auf der Rohrachse liegt.

Die Ultraschallwandlerpaare sind in einer Zwei-Traversen-Anordnung um das Rohr 16 angebracht, das heißt das Ultraschallsignal weist einen ersten Signalpfadabschnitt mit einem ersten Richtungsvektor auf, wird an der Rohrinnenwandung reflektiert und weist einen zweiten Signalpfadabschnitt mit einem zweiten Richtungsvektor auf, welcher ungleich dem ersten Richtungsvektor ist.

Die entsprechende 90°-Anordnung der Ultraschallwandlerpaare wird in Fig. 2 in einer geschnittenen Vorderansicht des Rohres 16 dargestellt.

Variante B beschreibt eine Zweipfad-Eintraversen Anordnung. Das Ultraschall-Durchflussmessgerät weist eine Auswerteeinheit 21 auf, an welche zwei Ultraschallwandler-Paare umfassend die Ultraschallwandler 22, 23 und 24, 25 angeschlossen sind. Diese sind über die Leitungen 22a, 23a und 24a, 25a mit der Auswerteeinheit verbunden.

Die Ultraschallwandler 22, 23 eines ersten Ultraschallwandlerpaares sind auf gegenüberliegenden Seiten des Rohres 26 angeordnet. Sie sind in einem Winkel von 180° zueinander angeordnet und parallel zur Richtung der Rohrachse zueinander versetzt angeordnet. Ein in das Medium schräg ausgesandtes Ultraschallsignal wird ohne Reflexion direkt empfangen. Man spricht daher von einer Eintraversen-Anordnung.

Die Ultraschallwandler 24 und 25 eines zweiten Ultraschallwandlerpaares sind umfangsverteilt zum ersten Ultraschallwandlerpaar angeordnet. Dabei erfolgt die umfangsverteilte Anordnung des zweiten Ultraschallpaares vorzugsweise in einem 180°-Winkel zum ersten Ultraschallpaar, wobei der Scheitelpunkt des Winkels auf der Rohrachse liegt.

Die entsprechende Anordnung der Ultraschallwandlerpaare wird in Fig. 2 in einer geschnittenen Vorderansicht des Rohres 26 dargestellt.

Ein- und Zweitraversenanordnungen und deren Anordnung in einer Zweipfadmessung gehören bereits zum Stand der Technik.

Fig. 3 zeigt ein Diagramm eines ungestörten Strömungsprofils eines Messmediums in einem Rohr im Fall einer voll ausgebildeten turbulenten Strömung (schraffierter Bereich) und einer voll ausgebildeten laminaren Strömung (reine Linie). Die Geschwindigkeit des Mediums weist nach oben in z-Richtung, mit dem Radius des Rohres als x-Achse. Dabei bezeichnet die Fläche 30b denjenigen Bereich, in dem die lokalen Geschwindigkeiten größer als die mittlere Geschwindigkeit ausfallen, also $v_r/v_{mittel} \geq 1$. Im Bereich 30a hingegen gilt $v_r/v_{mittel} < 1$.

Fig. 4a zeigt ein Beispiel eines gestörten Strömungsprofils 32 eines Messmediums in einem Rohr. Ein derartiges gestörtes Strömungsbild bildet sich beispielsweise aus, wenn ca 5D vor der Messstelle eine 90°-Rohrkrümmung angeordnet ist. Die Geschwindigkeit des Mediums weist wieder nach oben in z-Richtung, mit dem Radius des Rohres als x-Achse. Dabei bezeichnet die Fläche 33b denjenigen Bereich, in dem die lokalen Geschwindigkeiten kleiner als die mittlere Geschwindigkeit ausfallen, also $v_r/v_{mittel} < 1$. Im Bereich 33a hingegen gilt $v_r/v_{mittel} \geq 1$.

In Fig. 4b ist dasselbe gestörte Strömungsprofil nochmals im Rohrquerschnitt 34 dargestellt. Man erkennt, dass die Strömung aufgrund der Zentrifugalkräfte bei der Umlenkung im 90°-Krümmer nach außen (hier: nach oben) verdrängt wird. Anschließend wandern die verdrängten Anteile entlang der Rohrwand nach unten 33a, wo sie sich schließlich vereinigen und wieder mittig nach oben steigen 33b. Diese sogenannten Sekundärströmungen bilden somit einen symmetrischen Doppelwirbel, der sich dann besonders stark bemerkbar macht, wenn der Ultraschallstrahl genau mittig vertikal die Rohrleitung durchläuft (Linie S).

Legt man nun einen Ultraschall-Messpfad durch das jeweilige Strömungsprofil aus Fig. 3 und 4, sodass er wie bei Clamp-On-Systemen üblich mittig durch das Rohr verläuft, dann wird klar, weshalb der Messfehler im Fall eines gestörten Strömungsprofils im Vergleich zum ungestörten Profil durchgehend ins Negative abweicht: im Fall des ungestörten Profils durchläuft der Schall eine deutlich längere Teilstrecke, für die $v_r/v_{mittel} \geq 1$ gilt, als im Fall des gestörten Profils. Diese Ungleichverteilung ist eine direkte Folge der Mediumskontinuität, die bei Verdrängung von Geschwindigkeitsanteilen nach außen aufgrund von Strömungsstörungen dafür sorgt, dass die die Bereiche mit $v_r/v_{mittel} \geq 1$ über den gesamten Rohrquerschnitt gesehen kleiner ausfallen als beim ungestörten Profil. Dies führt beim gestörten Strömungsprofil (Fig. 4) dann zu einer kleineren Laufzeitdifferenz und damit zu einer kleineren lokalen Durchflussgeschwindigkeit als im Fall der ungestörten, voll ausgebildeten Strömung (Fig. 3), obwohl die mittlere Strömungsgeschwindigkeit in beiden Fällen identisch ist.

Bislang wird dem Kunden eine vorgeschriebene Einlaufstrecke vorgegeben - wie dies auch in Fig. 1 dargestellt ist. Diese vorgeschriebene Einlaufstrecke ist notwendig, um die für das Gerät spezifizierte Messungenauigkeit einzuhalten.

Gemäß einem Aspekt der vorliegenden Erfindung erhält der Kunde nunmehr die Ausgabe eines kompensierten Messwertes in Abhängigkeit u.a. von der Einlaufstrecke und der Art der Störung, so dass die Distanz zu einem störungsverursachenden Rohrelement, welche auch Einlaufstrecke genannt wird, verringert werden kann. Mit der Verringerung des Abstandes geht typischerweise eine Erhöhung der Messwertschwankung, also der Standardabweichung einher, weil sich die Störungen zeitlich instationär äußern. Dieser Nachteil wird jedoch bei weitem von dem Vorteil aufgewogen, das Ultraschall-Durchflussmesssystem näher an der Störung installieren zu können, ohne den mittleren Messfehler zu erhöhen, insbesondere wenn die Platzverhältnisse die Installation innerhalb der normalerweise vorgeschriebenen Einlaufstrecke gar nicht zulassen.

Das Verfahren soll beispielshaft nachfolgend nochmals näher erläutert werden.

Nach Störungen treten abhängig vom Störungstyp und vom Abstand zur Störung durch Abweichungen vom idealen Strömungsprofil Messfehler auf, da ein Clamp-On-Ultraschallgerät darauf ausgelegt ist, dass ein voll ausgebildetes rotationssymmetrisches Strömungsprofil vorliegt.

Die auftretenden Messfehler müssen einmalig pro Störungstyp, Abstand, Montagewinkel und evtl. Reynoldszahl ermittelt werden.

Dies geschieht entweder durch aufwendige Messreihen oder durch numerische Simulation der Strömungsverhältnisse in unterschiedlichen Abstanden nach den Störungen und Auswertung der berechneten Geschwindigkeitskomponenten. Im einfachsten Fall durch Mittelwertbildung der Geschwindigkeitskomponenten entlang eines fiktiven Schallstrahles. Als Ergebnis dieses Schrittes erhält man Daten, die angeben, wie groß der Messfehler ist, der entstehen würde, wenn ein Ultraschallgerät in der entsprechenden Position eingebaut werden würde. Werden diese Daten nun einem Ultraschall-Durchflussgerät zugänglich gemacht, so ist es möglich, den entstehenden Messfehler zu korrigieren ($k_D$)

Die Ermittlung der Messreihen erfolgt vorzugsweise im Werk oder auf einer Kalibrieranlage. Der Kunde/Anwender des Messgerätes ist in diesen Schritt nicht involviert

Um eine exakte Kompensation des gemessenen Durchflusses oder der Strömungsgeschwindigkeit zu erhalten, ist es notwendig, dass der Kunde angibt, wie seine spezielle Messanordnung aussieht (Abstand, Störungstyp, Viskosität...). Bei Einsatz einer 90°-Zweipfad-Zweitraversenanordnung oder einer 180°-Zweipfad-Eintraversenanordnung ist die Angabe der Montagewinkel zur Störung nicht erforderlich, da es in diesem Fall zu einer gegenseitigen Kompensation der winkelabhängigen Messfehleranteile kommt.

Mit Hilfe dieser Angaben und den aus den Messreihen oder den durch Simulation vorgegebenen Daten wird der Volumendurchfluss oder die Strömungsgeschwindigkeit direkt korrigiert. Bei Bedarf kann zudem der erwartete Messfehler angezeigt werden.

Für eine Ermittlung eines Messfehlers müssen folgende Parameter vorgegeben werden oder ggf. ermittelt werden.

1. Abstand der Montageposition von der Störung bzw. des störungsverursachenden Rohrelements
2. Art des störungsverursachenden Rohrelements (Krümmertyp, Ventil, Pumpe, usw.)
3. Ggf. kinematische Viskosität oder aktuelle Reynoldszahl des Mediums

Die vorgenannten Parameter müssen in das Messgerät oder in einen Computer eingegeben werden.

In einer ersten Ausführungsvariante der Erfindung wird ein Faktor $k_D$ ermittelt und der momentan ermittelte Durchfluss mit Hilfe dieses Faktors korrigiert.

Zur Ermittlung des Faktors $k_D$ wird auf einen Datensatz aus Messreihen zurückgegriffen, welcher für jeweils für verschiedene störungsverursachende Rohrelemente, für verschiedene Abstände zum strömungsverursachenden Rohrelement und für verschiedene Reynoldszahlen gemessen wurde.

In einer zweiten Ausführungsvariante der Erfindung kann die Ermittlung der Faktoren $k_D$ durch einen bestimmten Simulationsalgorithmus erfolgen. Diese Simulation kann mit Hilfe eines CFD-(computational fluid dynamics)-Programms für unterschiedliche Messmedien, Rohrelemente, Einlaufstrecken ... usw. erfolgen. Mittels CFD-Programm lassen sich zudem Strömungsprofile und damit Korrekturfaktoren bezogen auf eine aktuelle Strömungssituation vor Ort beim Kunden berechnen. Durch Mittelwertbildung der Geschwindigkeitskomponenten entlang des Schallpfades lässt sich der auftretende Messfehler berechnen und damit eine Kompensation des Messsignals um den strömungstechnisch bedingten Messfehler erreichen.

Wie man u.a. aus Fig. 4b erkennt ist bei einer Einpfadanordnung einer der entscheidenden Faktoren für den Messfehler die Montageorientierung zur Störung. Durch Verwendung der Zweipfadkorrektur und durch Verrechnung der Messwerte der beiden Ultraschallwandlerpaare - beispielsweise durch Mittelwertbildung - verschwindet diese Montageorientierungsabhängkeit der Ultraschallwandler weitgehend. Damit wird eine orientierungsunabhängige Korrektur ermöglicht.

Nach der Ermittlung des Korrekturfaktors $k_D$ entweder durch Rückgriff auf vorliegende Messreihen oder durch Simulation kann ein korrigierter Volumenfluss ermittelt werden. Dies erfolgt beispielsweise mit der Formel

$$V_{corr} = k_D(w_1 V_1 + w_2 V_2) \, ,$$

wobei

$V_{corr}$ = korrigierter Volumenfluss
$k_D$ = Korrekturfaktor (als Fuktion des Abstandes, des Strömungstyps und ggf. der Reynoldszahl)
$V_1$ = Volumenfluss gemessen mit dem ersten Ultraschallwandlerpaar
$V_2$ = Volumenfluss gemessen mit dem zweiten Ultraschallwandlerpaar
$w_1$ = Gewicht des ersten Volumenstromes
$w_2$ = Gewicht des zweiten Volumenstromes

Die Gewichtungen der Volumenströme liegen vorzugsweise bei 0,5.

Ist $w_1 = 0$ und $w_2 = 1$ wird nur Kanal 2 berücksichtigt, bei $w_1 = 1$ und $w_2 = 0$ wird nur Kanal1 berücksichtigt. Mit $w_1 = w_2 = 0,5$ werden beide Kanäle gleich gewichtet- dies entspricht einer Mittelwertbildung. Eine ungleiche Gewichtung wäre eventuell sinnvoll in einer speziellen Anordnung der Sensoren zueinander, z.B. wenn der empfohlene Montagewinkel der Sensorpaare zueinander nicht eingehalten werden kann, oder zum Beispiel nach einer außergewöhnlichen Störung.

Die Bestimmung des Korrekturfaktors kann sowohl durch eine mit der Auswerteeinheit des Messgeräts verbundene Anzeigeeinheit angezeigt werden oder alternativ durch eine mit dem Computer verbundene Anzeigeeinheit angezeigt werden.

Im Anschluss kann der Korrekturfaktor zur Kompensation des Messsignals eingesetzt werden.

Für die Ermittlung des Korrekturfaktors $k_D$ hat sich eine 180° Eintraversenanordnung - wie in Fig. 2 Variante B gezeigt - oder eine 90° Zweitraversenanordnung - wie in Fig. 2 Variante A gezeigt als besonders geeignet erwiesen Durch diese Anordnungen werden die Asymmetrien des Strömungsprofils bestmöglich erfasst und ausgeglichen.

Prinzipiell ist bei der Ermittlung des Korrekturfaktors $k_D$ auch eine Abhängigkeit von der Reynoldszahl zu berücksichtigen. Messungen haben gezeigt, dass der Einfluss erst bei Reynoldszahlen < 85'000 in größerem Maße auftritt. Zur Korrektur dieses Effekts kann man die aktuelle Reynoldszahl beispielsweise über die aktuelle Geschwindigkeit und kinematische Viskosität berechnen. Alternativ kann die aktuelle Reynoldszahl auch von einem entsprechenden Messgerät, zum Beispiel einem Corioliszähler übernommen werden.

Um eine Korrektur in Abhängigkeit der Reynoldszahl durchführen, sollten vorzugsweise die entsprechenden Korrekturdaten vorliegen d.h. die entstehenden Messfehler müssen entweder bei dieser Reynoldszahl gemessen oder mittels Simulation ermittelt werden. Ist während der Messung dann die kinematische Viskosität bekannt, so kann man die Reynoldszahl über die Geschwindigkeit und Innendurchmesser des Rohres berechnen. Mit Kenntnis von nunmehr Reynoldszahl, Störungstyp und Abstand kann der Korrekturfaktor exakt bestimmt werden.

Dies kann sowohl durch die Anzeigeeinheit des Ultraschall-Durchflussmessgerätes oder am Computer erfolgen. Dies ist unabhängig von der Korrektur des Volumenflusses und hängt nur von den zu erwartenden Messfehlern ab.

Die am Computer eingegebenen Parameter können durch ein Computerprogrammprodukt verarbeitet werden. Dies ermöglicht die Simulation der Messbedingungen unter Berücksichtigung der Anordnung der Ultraschallwandler an der Messstelle. Dieses Computerprogrammprodukt kann als Applikator ausgestaltet sein und dem Anwender die Kaufentscheidung für den konkreten Anwendungsfall erleichtern.

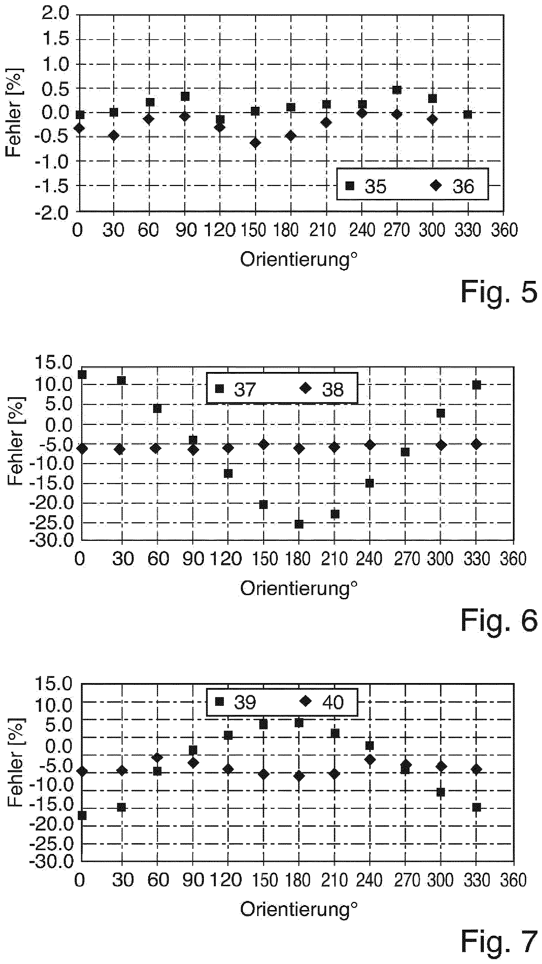

Die Auswirkungen unterschiedlichen Traversenmontagen und der ermittelte Korrekturfaktor $k_D$ wird in den Fig. 5-12 näher erläutert.

Die in Fig. 5-12 dargestellten Messergebnisse wurden mit dem Clamp-On Ultraschall-Durchflussmessgerät "Prosonic Flow 93 P" der Anmelderin an einem Rohr einer Nennweite DN 80 ermittelt. Allen Messstrecken ist ein dreistufiger Lochplattengleichrichter vorgeschaltet. Als störungsbildendes Rohrelement kamen entweder ein 90°-Krümmer oder zwei aufeinander folgende, um 90° zueinander verdrehte 90°-Krümmer (sog. Raumkrümmer) zum Einsatz. Die Ultraschallwandler sind an einem vertikal verlaufenden Rohrabschnitt angeordnet, dem das störungsbildende Rohrelement vorgelagert ist. Dieses Element bildet den Übergang von einem 20*DN langen horizontalen Rohrabschnitt zu dem besagten vertikalen Rohrabschnitt. Das Messmedium ist Leitungswasser. Die Temperatur betrug 20°C und wurde mit einer Schwankungsbreite von max. 0,1°C von Messung zu Messung eingeregelt. Die Messungen wurden bei einer konstanten Frequenz der Ultraschallsignale durchgeführt. Die konstante Frequenz liegt dabei vorzugsweise in einem Bereich zwischen 1-3 MHz. Die Fließgeschwindigkeit betrug konstant 20 l/s.

Fig. 5 zeigt Messungen des Durchflusses bzw. die Abweichungen zum Masterdurchflussmessgerät nach 40*DN gerader Messstrecke hinter einem dreistufigen Lochplattengleichrichter, was bei einer Nennweite von DN = 80 mm einem Abstand von 3200 mm entspricht. Die Messanordnung war eine Zweipfad-Zweitraversen-Anordnung (Variante A - Fig. 2)

Dieses Element bildet den Übergang von einem 20*DN langen horizontalen Rohrabschnitt zu dem besagten vertikalen Rohrabschnitt. Das Messmedium ist Leitungswasser. Die Temperatur betrug 20°C und wurde mit einer Schwankungsbreite von max. 0,1°C von Messung zu Messung eingeregelt. Die Messungen wurden bei einer konstanten Frequenz der Ultraschallsignale durchgeführt. Die konstante Frequenz liegt dabei vorzugsweise in einem Bereich zwischen 1-3 MHz. Die Fließgeschwindigkeit betrug konstant 20 l/s.

Fig. 5 zeigt Messungen des Durchflusses bzw. die Abweichungen zum Masterdurchflussmessgerät nach 40*DN gerader Messstrecke hinter einem dreistufigen Lochplattengleichrichter, was bei einer Nennweite von DN = 80 mm einem Abstand von 3200 mm entspricht. Die Messanordnung war eine Zweipfad-Zweitraversen-Anordnung (Variante A - Fig. 2)

Die Ultraschall-Clamp-On Sensoranordnung wurde mit einem 30°-Versatz pro Messpunkt um 360° um die Rohrachse gedreht. Wie man aus den Messergebnissen erkennt, ergibt sich bei der Messung ein Messfehler von ca. ±0,5 %. Die beiden Mess-Signale pro Messpunkt sind jeweils die Messkanäle bzw. je ein Signal von einem Ultraschallwandlerpaar. Man erkennt, dass selbst bei einem sehr großen Abstand von der Störung kein vollständig symmetrisches Strömungsprofil vorliegt.

In Fig. 5 ist lediglich eine Referenzmessung für ein Zweipfad-Zweitraversen-System bei einer Einlauflänge von 40*DN dargestellt. Ähnliche Messfehler von etwa ±0,5 % waren auch für Zweipfad-Eintraversen-Systeme unter analogen Messbedingung und analoger Einlauflänge zu beobachten.

Fig. 6 stellt in der Messkurve 37 eine Fehlerbestimmung - also die Abweichung des gemessenen Durchflusses gegenüber dem tatsächlich anliegenden Durchfluss - dar. Die einzelnen Messpunkte der Messkurve 37 wurden ermittelt, indem die Ultraschallwandleranordnung jeweils um einen Winkel von 30° entlang des Rohrumfangs rotiert wurde. Die Messanordnung war eine Einpfad-Eintraversenanordnung mit einem störungsverursachenden Rohrelement in Form eines 90°-Krümmers, einem anliegenden Durchfluss von 20 l/s und einem konstanten Abstand der Messanordnung vom störungsverursachenden Rohrelement von 5*DN (fünffache Nennweite). Sämtliche weiteren Bedingungen waren analog zu den Messbedingungen der Referenzmessung in Fig. 5. Bei der Einpfadmessung erkennt man einen hohen negativen Messfehler von etwa -25% bei einer Orientierung von 180°. Und insgesamt Messfehlereinzelwerte, die zwischen +12% und -25% schwanken. Wie man erkennt, ist der Messfehler bzw. die Messunsicherheit bei konstantem Abstand von der Störung stark von der Montageposition der Ultraschallwandler entlang des Rohrumfangs abhängig.

Messkurve 38 zeigt eine Fehlerbestimmung unter Einsatz einer Zweipfad-Eintraversenanordnung (wie in Variante B der Fig. 2 Sensoren um 180° gegeneinander versetzt). Dabei wurde zusätzlich zur ersten Messkurve des ersten Ultraschallmesspaares das zweite Ultraschallmesspaar bzw. die damit ermittelten Werte zur Kompensation des Messfehlers eingesetzt. Dabei werden das Signal des ersten Ultraschallwandlerpaares und das Signal des zweiten Ultraschallwandlerpaares durch Mittelwertbildung miteinander verrechnet. Nach der Verrechnung der beiden Messpfade kann ein vergleichsweise konstanter Messfehler - wie aus Messkurve 38 ersichtlich - ermittelt werden, welcher für die spätere Berechnung des Korrekturfaktors $k_D$ verwendet werden kann. Dieser konstante Messfehler unterliegt für diese Anordnung der US-Transducer zur Störung üblicherweise einer Schwankung von etwa ±0,5 bis ±1% und liegt im vorliegenden Ausführungsbeispiel im Mittel bei etwa -6%.

Fig. 7 zeigt eine Messkurve 39 mit einer Fehlerbestimmung bezüglich einer Einpfad-Eintraversenmessung nach einem sogenannten Raumkrümmer, also zwei vorgelagerten 90° Krümmern in zwei senkrecht zueinander stehenden Ebenen, beispielsweise einem horizontalen und einem vertikalen Krümmer. Der Abstand zur Störung beträgt 5*DN. Alle weiteren Messparameter sind analog zu der in Fig. 6 beschriebenen Messanordnung. Wie man aus Fig. 7 erkennt weist die Messkurve 39 einen maximalen positiven Fehler von ca. 5% auf. Messkurve 40 stellt den rotationswinkelabhängigen Messfehler einer Zweipfad-Eintraversen-Messung dar, bei der wiederum das Signal des ersten Ultraschallwandlerpaares und das Signal des zweiten Ultraschallwandlerpaares durch Mittelwertbildung miteinander verrechnet wurden. Wie man auch hierbei erkennt erlauben die zusätzlichen Messdaten des zweiten Ultraschallwandlerpaares eine gute Kompensation des schwankenden Messwertes des ersten Ultraschallwandlerpaares bei einem Messfehler von -5% mit einer Schwankungsbreite von ± 2%.

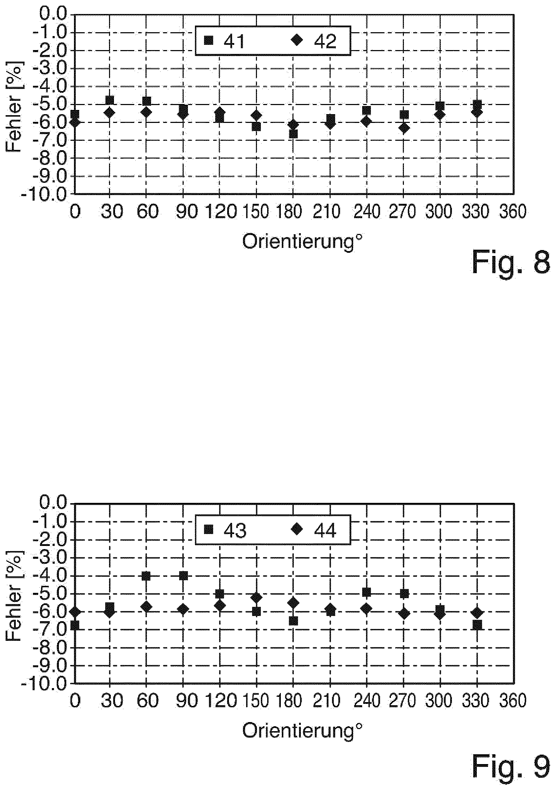

Die Messkurven von Fig. 8 und Fig. 9 wurden im Vergleich zu Fig. 6 und 7 unter analogen Messungsbedingungen aufgenommen, allerdings jeweils mittels einer Zweitraversenanordnung. Dabei wird in Fig. 8 ein 90°-Krümmer als störungsverursachendes Rohrelement eingesetzt und in Fig. 9 ein Raumkrümmer. Der Abstand zur Störung beträgt jeweils 5*DN. Dabei stellen die Messkurven 41 und 43 jeweils die Fehlerkurve bei einer Einpfad-Zweitraversenanordnung dar und die Messkurven 42 und 44 die gemittelte Fehlerkurve unter Einbeziehung der Messergebnisse des zweiten Messpfades bzw. des zweiten Ultraschallwandlerpaares bei einer Zweipfad-Zweitraversenanordnung. Die Anordnung des 2. Messpfades ist um 90° zum ersten versetzt. Die Messkurve 42 der Fig. 8 zeigt einen Messfehler von durchschnittlich etwa -6% an. Die in Fig. 9 dargestellte Messkurve 44 zeigt einen durchschnittlichen Messfehler von etwa -5,5% an.

Die Messkurven 41 und 43 der Einpfadmessungen der Zweitraversenanordnung weisen eine wesentlich geringere Messfehlerschwankung auf als die Einpfadmessungen der Eintraversenanordnung. Dies geht auf den kompensierenden Effekt der Zweitraversen-anordnung mit ihrem einmal hin und wieder zurück laufenden Schallstrahl zurück, bei dem sich quer zur Strömung verlaufende Geschwindigkeitskomponenten durch ihre gegenläufige Erfassung weitestgehend gegenseitig auslöschen .

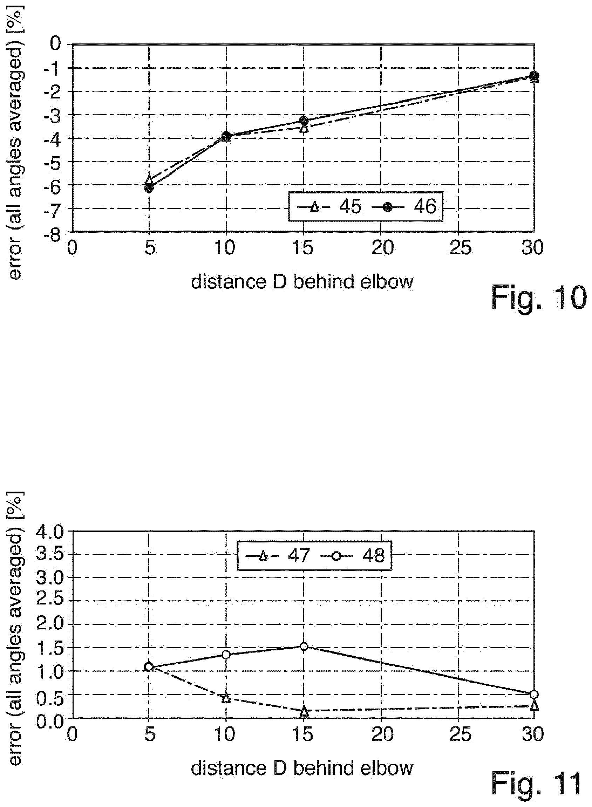

Fig. 10 zeigt einen aus den Einzelwerten der Messfehler über alle Orientierungen (Versatzwinkelstellungen um das Rohr) gemittelten Messfehler als Funktion zum Abstand vom störungsverursachenden Rohrelement. Dieses Diagramm bezieht sich auf die Messergebnisse bezüglich eines 90°-Krümmers, wobei Kurve 45 eine Zweipfad-Zweitraversenanordnung wiedergibt und die Kurve 46 eine Zweipfad-Eintraversenanordnung beschreibt. Diese Fehlerwerte oder davon abgeleitete kD-Werte können dem Kunden zur Verfügung gestellt werden.

Das Diagramm in Fig. 11 zeigt die Variation des Messfehlers bei unterschiedlichen Einlaufstrecken bzw. Abständen von der Störung. Dieser Wert ist wichtig um die Streuung bzw. Messfehlerschwankung des in Fig. 10 ermittelten Messfehlers zu beschreiben. Die Kurve 47 beschreibt dabei eine Zweipfad-Zweitraversenanordnung und die Kurve 48 eine Zweipfad-Eintraversenanordnung. Dieser Wert wird vorzugsweise zusätzlich zum $k_D$-Wert angegeben um dem Kunden eine Bewertung hinsichtlich der Zuverlässigkeit des Messfehlers zu erlauben.

Eine typische Eingabe durch den Kunden wäre z.B.

| | |
|---|---|
| Anordnung der Ultraschallwandler: | Zweitraversensystem |
| Abstand von der Störung: | 10*DN |
| Art der Störung: | 90° Krümmer |
| Antwort des Systems: | der mittlere, über alle Orientierungen gemittelter Messfehler bzw. Messunsicherheit liegt bei den vorgenannten Bedingungen bei -4% mit einer Messfehlerschwankung bzw. Variation des Messfehlers von ±0,5% |
| Der Korrekturfaktor $k_D$ beträgt: | 1.04167 (= 100/(-4+100)), wobei der Korrekturfaktor den zu erwartenden Messfehler kompensiert... ..... |
| Berechnung $k_D$ allgemein: | |

$$k_D = 100/(\text{mittlerer Messfehler[\%]}+100)$$

Die oben genannten Werte aus dem Kurven 45 und 47 der Fig. 10 und 11 ablesbar.

Weitere Messergebnisse haben gezeigt, dass bei Reynoldszahl Re < 85'000 bei Ein- oder Zweitraversensystemen der gemittelte Messfehler leicht abnimmt.

Da nicht alle Winkelpositionen - wie aus Fig. 5-11 ersichtlich wird - gemessen werden können, können Zwischenwerte z.B. ein 19°-Winkel zur Strömungsstörung durch Interpolation von zwei gemessenen Werten an die Realbedingungen approximiert werden.

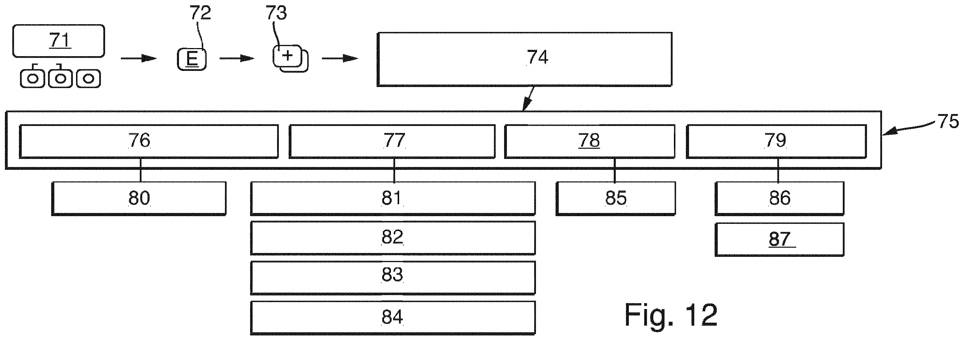

Fig. 12 zeigt ein Eingabefeld, wie es entweder in einem Applikator, in einem Computer, oder in einem Messgerät durch eine Ausgabeeinheit - z.B. ein Display oder einen Bildschirm - angezeigt wird.

Die Felder 71-73 sind lediglich Eingabeelemente bzw. Signaltastenfolgen für die einzelnen Parameter durch den Anwender/Kunden. Feld 74 zeigt den Wahlpunkt zur Auswahl der Ausgabe eines Messfehlers und ggf. dessen Korrektur an. Dieser Menüpunkt kann z.B. "Enhanced Flow Correction" genannt werden. Der Menüpunkt "Enhanced Flow Correction" weist verschiedene Menüunterpunkte auf. Die Menüunterpunkte entsprechen den zuvor genannten Parameter, welche der Kunde eingeben muss.

Die Parameter können manuell eingegeben werden oder als Drop-Down Menü ausgestaltet sein.

Feld 76 beschreibt die Einlaufstrecke bzw. den Abstand der Messanordnung zur Störung, so z.B. 10*DN oder 1m bei einem Rohr mit dem Innendurchmesser 100 mm. Dies kann in einem Eingabefeld 80 erfolgen.

Feld 77 beschreibt den Störungstyp . so z.B. 90°-Krümmer, 2x 90°-Krümmer mit Krümmung in einer Ebene, 2x 90°Krümmer mit Krümmung in zwei verschiedenen Ebenen ... usw. Diese Untermenüpunkte können beispielsweise auch als dropdown-Felder ausgebildet sein.

So kann Feld 81 beispielsweise eine 90°-Krümmung sein, Feld 82 eine 2*90° Raumkrümmung mit zwei Krümmungen in einer Ebene, Feld 83 eine Pumpe und Feld 84 weitere Optionen aufweisen.

Feld 78 weist das Untermenü "Kinematische Viskosität" auf. Hier empfiehlt sich ein Eingabefeld 85 in welchem die entsprechende kinematische Viskosität des Mediums eingetragen werden kann.

Feld 79 weist das Untermenü "Ultraschallwandleranordnung" auf. Hier erfolgt die Auswahl, dahingehend ob eine 180°-Zweipfad-Eintraversen- oder eine 90°-Zweipfad-Zweitraversenanordnung der Ultraschallwandlerpaare vorliegt. Die Eingabefelder 86 und 87 sind entsprechend dieser beiden Auswahlmöglichkeiten gekennzeichnet und vom Nutzer wählbar.

Dieser Untermenüpunkt 79 könnte auch entfallen, sofern er insbesondere beim Anwendung im Messgerät an anderer Stelle vorgegeben wird, so z.B. durch eine gesonderte Sensorkonfiguration.

Der Untermenükomplex 75 mit den Feldern 76-79 kann beispielsweise ebenfalls als Drop-Down Menü ausgestaltet sein, bereits auf der Anzeige vorgesehen sein oder als separates Fenster geöffnet werden.

Die zuvor beschriebenen Messergebnisse wurden für Zweipfadmessungen, also für Messungen mit zwei Ultraschallwandlerpaaren durchgeführt. Es ist allerdings auch möglich mehr als zwei Ultraschallwandlerpaare umfangsverteilt anzuordnen.

Auch eine Messung mit lediglich einem Ultraschallwandlerpaar ist möglich, allerdings ist diese Anordnung nicht erfindungsgemäß und es wird hierfür die Winkellage des Ultraschallwandlerpaares am Rohr benötigt, um eine Berechnung des Korrekturfaktors zu ermöglichen.

Diese Abhängigkeit von der Winkelposition des Ultraschallwandlerpaares werden bei Zwei- oder Mehrpfadmessungen durch die Ermittlung des zweiten Messsignals bzw. des zweiten Messpfades und die Verrechnung der Messfehler miteinander kompensiert.

**Bezugszeichenliste**

| 1 | Ultraschallwandler |
|---|---|
| 2 | Ultraschallwandler |
| 3 | Kopplungsadapter |
| 4 | Metallbänder |
| 5 | Rohr |
| 6a | Krümmung |
| 6b | Ventile |
| 6c | Pumpen |
| 6d | Krümmungsvarianten |

| 11 | Auswerteeinheit |
|---|---|
| 12-15 | Ultraschallwandler |
| 12a - 15a | Leitungen |
| 16 | Rohr |

| 21 | Auswerteeinheit |
|---|---|
| 22-25 | Ultraschallwandler |
| 22a - 25a | Leitungen |
| 26 | Rohr |

| 30a | Strömungssegment |
|---|---|
| 30b | Randbereich |
| 31 | laminares Strömungsprofil |
| 32 | gestörtes Strömungsprofil |
| 33a | Randbereich |
| 33b | zentraler Strömungsbereich |

| 34 | Rohrquerschnitt |
| S | Signalpfad |

| 35-48 | Messkurve |

| 71-73 | Eingabetasten/Signaltastenabfolge |

| 74 | Eingabefeld |

| 75 | Drop-Down-Menüleiste |

| 76 | Eingabefeld "Einlaufstrecke" |

| 77 | Eingabefeld "Störungstyp" |

| 78 | Eingabefeld "Kinematische Viskosität" |

| 79 | Eingabefeld "Ultraschallwandleranordnung" |

| 80 | Eingabefeld "Maßeinheit" |

| 81 | Eingabefeld "90°-Krümmer" |

| 82 | Eingabefeld "90°-Raumkrümmer" |

| 83 | Eingabefeld "Pumpe" |

| 84 | Eingabefeld "weitere Optionen" |

| 85 | Eingabefeld "Maßeinheit" |

| 86 | Eingabefeld "180°-Zweipfad-Eintraversenanordnung" |

| 87 | Eingabefeld "90°-Zweipfad-Zweitraversenanordnung" |

**Patentansprüche**

1. Verfahren zur Ermittlung eines kompensierten Durchflusses und/oder einer kompensierten Strömungsgeschwindigkeit,

wobei die Kompensation eines strömungstechnisch bedingten Messfehlers bei einer Durchflussmessung mit einer Clamp-On-Ultraschall-Durchflussmessgerät Anordnung an einem Rohr (5, 16, 26) mittels einer Auswerteeinheit (11, 21) des Durchflussmessgerätes und/oder einem Computer erfolgt,
wobei folgende Verfahrensschritte durchgeführt werden:

a) Einspeisen von Informationen bezüglich der Art eines strömungsbeeinflussenden Rohrelements (6a-6d) in die Auswerteeinheit (11, 21) und/oder den Computer;
b) Einspeisen von Informationen bezüglich des Abstandes ($x_a$-$x_d$) der Anordnung von dem strömungsbeeinflussenden Rohrelement (6a-6d) in die Auswerteeinheit (11, 21) und/oder Computer;
c) Kompensieren eines Messfehlers mittels eines Korrekturfaktors $k_D$ als Funktion der Informationen aus den Schritten a) und b);
d) Ermitteln eines um den Korrekturfaktor $k_D$ korrigierten Durchflusses und/oder einer um den Korrekturfaktor $k_D$ korrigierten Strömungsgeschwindigkeit,

**dadurch gekennzeichnet,**
**dass** eine Zweipfadmessung mit zwei Ultraschallwandlerpaaren (12-15, 22-25) erfolgt,
wobei die Ultraschallwandlerpaare (12-15, 22-25) jeweils einen Messpfad bilden,

wobei die Ultraschallwandlerpaare (12-15, 22-25) eine 180°-Zweipfad-Eintraversen- oder eine 90°-Zweipfad-Zweitraversenanordnung einnehmen,

wobei bei Einsatz der 180°-Zweipfad-Eintraversen- oder der 90°-Zweipfad-Zweitraversenanordnung Asymmetrien des Strömungsprofils erfasst und ausgeglichen werden,

wobei beide Ultraschallwandlerpaare (12-15, 22-25) im Falle der 180°-Zweipfad-Eintraversenanordnung in einer gemeinsamen Ebene angeordnet sind,

wobei die Ultraschallwandlerpaare (12-15, 22-25) im Falle der 90°-Zweipfad-Zweitraversenanordnung jeweils in rechtwinklig zueinanderstehenden Ebenen angeordnet sind,

wobei eine winkelabhängige Montageorientierung der Ultraschallwandlerpaare (12-15, 22-25) in Bezug auf das strömungsbeeinflussende Rohrelement nicht in die Ermittlung des korrigierten Durchflusses und/oder der korrigierten Strömungsgeschwindigkeit einfließt,

wobei es zu einer gegenseitigen Kompensation winkelabhängiger Messfehleranteile der beiden Messpfade kommt.

2. Verfahren nach Anspruch 1, **dadurch gekennzeichnet,**
**dass** eine Berechnung eines korrigierten Volumenstromes in Abhängigkeit vom Korrekturfaktor $k_D$ erfolgt.

3. Verfahren nach einem der vorhergehenden Ansprüche, **dadurch gekennzeichnet,**
**dass** eine Berechnung einer Messunsicherheit als Funktion der Information aus den Schritten a) und b) des Anspruchs 1 erfolgt.

4. Verfahren nach einem der vorhergehenden Ansprüche, **dadurch gekennzeichnet,**
**dass** ein Einspeisen von Informationen bezüglich Reynoldszahl und/oder kinematischen Viskosität eines zu messenden Mediums in die Auswerteeinheit (11, 21) und/oder Computer erfolgt, wobei diese Informationen in die Ermittlung des Korrekturfaktors $k_D$ mit eingehen.

5. Verfahren nach einem der vorhergehenden Ansprüche, **dadurch gekennzeichnet,**
**dass** der Einfluss der Orientierung eines ersten Ultraschallwandlerpaares (12-13, 22-23) der beiden Ultraschallwandlerpaare (12-15, 22-25) entlang des Rohrumfangs auf Messergebnisse durch Messergebnisse eines zweiten Ultraschallwandlerpaares (14-15, 24-25) der beiden Ultraschallwandlerpaare (12-15, 22-25) kompensiert werden.

6. Verfahren nach einem der vorhergehenden Ansprüche, **dadurch gekennzeichnet,**
**dass** zur Ermittlung des Korrekturfaktors $k_D$ ausschließlich die Art des strömungsbeeinflussenden Rohrelements (6a-6d) und der Abstand ($x_a$-$x_d$) der Anordnung der Ultraschallwandlerpaare (12-15, 22-25) von dem strömungsbeeinflussenden Rohrelement (6a-6d) herangezogen werden oder ausschließlich die Art des strömungsbeeinflussenden Rohrelements (6a-6d) und der Abstand ($x_a$-$x_d$) der Anordnung der Ultraschallwandlerpaare (12-15, 22-25) von dem strömungsbeeinflussenden Rohrelement (6a-6d), sowie die Informationen bezüglich der Reynoldszahl und/oder der kinematischen Viskosität eines zu messenden Mediums herangezogen werden.

7. Verfahren nach einem der vorhergehenden Ansprüche, **dadurch gekennzeichnet,**

**dass** ein Einspeisen von Informationen bezüglich der Anordnung der Ultraschallwandlerpaare (12-15, 22-25) zueinander am Rohr (5, 16, 26), insbesondere Informationen hinsichtlich des Winkels der Ultraschallpaare (1, 2, 12-15, 22-25) zueinander,

wobei der Scheitelpunkt des Winkels auf der Rohrachse angeordnet ist und/oder Informationen hinsichtlich der Anzahl der Traversen eines Ultraschallsignals zwischen den Ultraschallwandlern eines Ultraschallwandlerpaares (1, 2, 12-15, 22-25), erfolgt,

wobei diese Informationen bei in die Ermittlung des Korrekturfaktors $k_D$ mit eingehen.

8. Verfahren nach einem der vorhergehenden Ansprüche, **dadurch gekennzeichnet,**
**dass** die Ermittlung des Korrekturfaktors $k_D$ durch ein Simulationsverfahren erfolgt.

9. Verfahren nach einem der vorhergehenden Ansprüche, **dadurch gekennzeichnet,**
**dass** die Ermittlung des Korrekturfaktors $k_D$ durch Vergleich der eingespeisten Informationen mit Messreihen erfolgt, welche auf einem Datenspeicher des Ultraschall-Durchflussmessgerätes, des Computers hinterlegt sind oder welche von einem Server abrufbar sind.

10. Verfahren nach Anspruch 8, **dadurch gekennzeichnet,**

**dass** der Vergleich eine Interpolation der Messdaten umfasst, sofern die in den Messreihen hinterlegten Messbedingungen nicht vollständig mit den eingespeisten Informationen korrelieren.

11. Verfahren nach einem der vorhergehenden Ansprüche, **dadurch gekennzeichnet,**
    **dass** die Art des störungsverursachenden Rohrelements (6a-6d) ausgesucht ist aus der folgenden Gruppe: winkelförmige Rohrkrümmer, insbesondere 90° Krümmer oder Raumkrümmer, Pumpen, Sensorelemente, Ventile, Verjüngungen und/oder Rohrerweiterungen.

12. Clamp-On-Ultraschall-Durchflussmessgerät umfassend:

    - eine Auswerteeinheit (11, 21);

    **dadurch gekennzeichnet,**
    **dass** zwei Ultraschallwandlerpaare (12-15, 22-25) an einem Rohr (5, 16, 26) angeordnet sind und eine 180°-Zweipfad-Eintraversen oder eine 90°-Zweipfad-Zweitraversenanordnung einnehmen, und
    **dass** die Auswerteeinheit (11, 21) ausgebildet ist zur Ermittlung eines kompensierten Durchflusses und/oder einer kompensierten Strömungsgeschwindigkeit mittels eines Verfahrens nach einem der Ansprüche 1 bis 11.

**Claims**

1. Procedure for determining a compensated flow and/or a compensated flow velocity,
   wherein the compensation of a measuring error, caused by flow-related conditions, during a flow measurement is carried out with a clamp-on ultrasonic flowmeter arrangement on a pipe (5, 16, 26) using an evaluation unit (11, 21) of the flowmeter and/or a computer,
   wherein the following procedural steps are performed:

   a) Information regarding the type of pipe element (6a-6d) that influences the flow is fed into the evaluation unit (11, 21) and/or the computer;
   b) Information regarding the distance ($x_a$-$x_d$) of the arrangement from the pipe element that influences the flow (6a-6d) is fed into the evaluation unit (11, 21) and/or computer;
   c) Compensation of a measuring error using a correction factor $k_D$ as a function of the information from steps a) and b);
   d) A flow, corrected by the correction factor $k_D$, is determined and/or a flow velocity corrected by the correction factor $k_D$, is determined

   **characterized in that**
   a two-path measurement takes place with two pairs of ultrasonic transducers (12-15, 22-25),
   wherein the pairs of ultrasonic transducers (12-15, 22-25) each form a measuring path,
   wherein the pairs of ultrasonic transducers (12-15, 22-25) adopt a 180° two-path single-traverse arrangement or a 90° two-path dual-traverse arrangement, wherein when the 180° two-path single-traverse arrangement or the 90° two-path dual-traverse arrangement is used, asymmetries of the flow profile are recorded and compensated for
   wherein in the event of the 180° two-path single-traverse arrangement both pairs of ultrasonic transducers (12-15, 22-25) are arranged on a common plane, wherein in the event of the 90° two-path dual-traverse arrangement, the pairs of ultrasonic transducers (12-15, 22-25) are arranged on planes that are perpendicular to one another,
   wherein an angle-dependent installation orientation of the pairs of ultrasonic transducers (12-15, 22-25) in relation to the pipe element that influences the flow is not taken into consideration in determining the corrected flow and/or the corrected flow velocity,
   wherein parts of the measuring error, which depend on the angle, of the two measuring paths are mutually compensated.

2. Procedure as claimed in Claim 1, **characterized in that**
   a corrected volume flow is calculated depending on the correction factor $k_D$.

3. Procedure as claimed in one of the previous claims, **characterized in that** an uncertainty of measurement is calculated as a function of the information from steps a) and b) in Claim 1.

4. Procedure as claimed in one of the previous claims, **characterized in that** information regarding the Reynolds number and/or the kinematic viscosity of a medium to be measured is fed into the evaluation unit (11, 21) and/or computer, wherein this information is taken into account in determining the correction factor $k_D$.

5. Procedure as claimed in one of the previous claims, **characterized in that** the influence of the installation orientation of a first pair of ultrasonic transducers (12-13, 22-23) of the two pairs of ultrasonic transducers (12-15, 22-25) along the pipe circumference on measurement results is compensated by measurement results of a second pair of ultrasonic transducers (14-15, 24-25) of the two pairs of ultrasonic transducers (12-15, 22-25).

6. Procedure as claimed in one of the previous claims, **characterized in that** - for the purpose of determining the correction factor $k_D$ - only the type of the pipe element that influences the flow (6a-6d) and the distance ($x_a$-$x_d$) of the arrangement of the pairs of ultrasonic transducers (12-15, 22-25) from the pipe element that influences the flow (6a-6d) are taken into account, or only the type of the pipe element that influences the flow (6a-6d) and the distance ($x_a$-$x_d$) of the arrangement of the pairs of ultrasonic transducers (12-15, 22-25) from the pipe element that influences the flow (6a-6d) are taken into account, and the information with regard to the Reynolds number and/or the kinematic viscosity of a medium to be measured is taken into account.

7. Procedure as claimed in one of the previous claims, **characterized in that** information regarding the arrangement of the pairs of ultrasonic transducers (12-15, 22-25) in relation to one another on the pipe (5, 16, 26), particularly information concerning the angle of the pairs of ultrasonic transducers (1, 2, 12-15, 22-25) in relation to one another, is fed in
wherein the apex of the angle is arranged on the pipe axis
and/or wherein information regarding the number of traverses of an ultrasonic signal between the ultrasonic transducers of a pair of ultrasonic transducers (1, 2, 12-15, 22-25) is fed in,
wherein this information is taken into account when determining the correction factor $k_D$.

8. Procedure as claimed in one of the previous claims, **characterized in that** the correction factor $k_D$ is determined by a simulation procedure.

9. Procedure as claimed in one of the previous claims, **characterized in that**
the correction factor $k_D$ is determined by comparing the information that is fed in with a measurement series that is saved on a data memory of the ultrasonic flowmeter, of the computer, or which can be retrieved from a server.

10. Procedure as claimed in Claim 8, **characterized in that**
the comparison comprises an interpolation of the measured data if the measuring conditions saved in the measurement series do not fully correlate to the information supplied.

11. Procedure as claimed in one of the previous claims, **characterized in that** the type of pipe element (6a-6d) that causes the disturbance is selected from the following group: angled pipe elbow, particularly a 90° elbow or an out-of-plane bend, pumps, sensor elements, valves, restrictions and/or pipe expansions.

12. Clamp-on ultrasonic flowmeter comprising:

   - an evaluation unit (11, 21);

   **characterized in that**
   two pairs of ultrasonic transducers (12-15, 22-25) are arranged on a pipe (5, 16, 26) and form a 180° two-path single-traverse arrangement or a 90° two-path dual-traverse arrangement, and
   **in that** the evaluation unit (11, 21) is designed to determine a compensated flow and/or a compensated flow velocity using a procedure as claimed in one of the Claims 1 to 11.

**Revendications**

1. Procédé destiné à la détermination d'un débit compensé et/ou d'une vitesse d'écoulement compensée,
la compensation d'une erreur de mesure liée à l'écoulement étant effectuée dans le cadre d'une mesure de débit avec un arrangement de débitmètre à ultrasons Clamp-On sur un tube (5, 16, 26) au moyen d'une unité d'exploitation (11, 21) du débitmètre et/ou d'un ordinateur,
les étapes de procédé suivantes étant exécutées :

a) Transmission à l'unité d'exploitation (11, 21) ou à l'ordinateur d'informations concernant le type d'un élément de tube (6a-6d) influençant l'écoulement ;

b) Transmission à l'unité d'exploitation (11, 21) ou à l'ordinateur d'informations concernant la distance ($x_a$-$x_d$) de l'arrangement de l'élément de tube (6a-6d) influençant l'écoulement ;

c) Compensation d'une erreur de mesure au moyen d'un facteur de correction $k_D$ en tant que fonction des informations provenant des étapes a) et b) ;

d) Détermination d'un débit corrigé du facteur de correction $k_D$ et/ou d'une vitesse d'écoulement corrigée du facteur de correction $k_D$,

**caractérisé**
**en ce que** la mesure à deux chemins est effectuée à l'aide de deux paires de convertisseurs à ultrasons (12-15, 22-25),

les paires de convertisseurs à ultrasons (12-15, 22-25) formant respectivement un chemin de mesure,

les paires de convertisseurs à ultrasons (12-15, 22-25) constituant un arrangement à une traverse et à deux chemins à 180°, ou à deux traverses et à deux chemins à 90°,

des asymétries du profil d'écoulement étant mesurées et compensées en cas d"utilisation d'un arrangement à une traverse et à deux chemins à 180°, ou à deux traverses et à deux chemins à 90°

les paires de convertisseurs à ultrasons (12-15, 22-25) étant disposées dans un plan commun dans le cas de l'arrangement à une traverse et à deux chemins à 180°,

les paires de convertisseurs à ultrasons (12-15, 22-25) étant disposées dans des plans perpendiculaires l'un à l'autre dans le cas de l'arrangement à deux traverses et à deux chemins à 90°,

une position de montage des paires de convertisseurs à ultrasons (12-15, 22-25), dépendant de l'angle par rapport à l'élément de tube influençant l'écoulement, n'étant pas prise en compte dans la détermination du débit corrigé et/ou de la vitesse d'écoulement corrigée,

une compensation réciproque des parts d'erreur de mesure, dépendant de l'angle, des deux chemins de mesure étant réalisée.

2. Procédé selon la revendication 1, **caractérisé**
**en ce qu'**est effectué un calcul d'un débit volumique corrigé en fonction du facteur de correction $k_D$.

3. Procédé selon l'une des revendications précédentes, **caractérisé en ce qu'**est effectué un calcul d'une incertitude de mesure en tant que fonction des informations provenant des étapes a) et b) de la revendication 1.

4. Procédé selon l'une des revendications précédentes, **caractérisé**
**en ce qu'**intervient une transmission d'informations concernant le nombre de Reynolds et/ou la viscosité cinématique d'un produit à mesurer dans l'unité d'exploitation (11, 21) et/ou l'ordinateur, ces informations étant prises en compte dans la détermination du facteur de correction $k_D$.

5. Procédé selon l'une des revendications précédentes, **caractérisé**
**en ce que** l'influence de la position de montage d'une paire de convertisseurs à ultrasons (12-13, 22-23) des deux paires de convertisseurs à ultrasons (12-15, 22-25) le long de la circonférence du tube sur les résultats de mesure est compensée par les résultats de mesure d'une deuxième paire de convertisseurs à ultrasons (14-15, 24-25) des deux paires de convertisseurs à ultrasons (12-15, 22-25).

6. Procédé selon l'une des revendications précédentes, **caractérisé**
**en ce que**, pour la détermination du facteur de correction $k_D$, seuls le type de l'élément de tube (6a-6d) influençant l'écoulement et la distance ($x_a$-$x_d$) de l'arrangement des paires de convertisseurs à ultrasons (12-15, 22-25) par rapport à l'élément de tube (6a-6d) influençant l'écoulement sont pris en compte, ou seuls le type de l'élément de tube (6a-6d) influençant l'écoulement et la distance ($x_a$-$x_d$) de l'arrangement des paires de convertisseurs à ultrasons (12-15, 22-25) par rapport à l'élément de tube (6a-6d) influençant l'écoulement, ainsi que l'information concernant le nombre de Reynolds et/ou la viscosité cinématique d'un produit à mesurer, sont pris en compte.

7. Procédé selon l'une des revendications précédentes, **caractérisé**
**en ce qu'**intervient une transmission
d'informations concernant la disposition des paires de convertisseurs à ultrasons (12-15, 22-25) l'une par rapport à l'autre sur le tube (5, 16, 26), notamment des informations concernant l'angle des paires de convertisseurs à ultrasons (1, 2, 12-15, 22-25) entre elles - le sommet de l'angle étant disposé sur l'axe de tube - et/ou d'informations concernant le nombre de traverses d'un signal à ultrasons entre les convertisseurs à ultrasons d'une paire de convertisseurs à ultrasons (1, 2, 12-15, 22-25),
ces informations étant prises en compte dans la détermination du facteur de correction $k_D$.

8. Procédé selon l'une des revendications précédentes, **caractérisé en ce qu'**est effectuée la détermination du facteur de correction $k_D$ par un procédé de simulation.

9. Procédé selon l'une des revendications précédentes, **caractérisé en ce que** la détermination du facteur de correction $k_D$ s'effectue par comparaison des informations transmises avec les séries de mesure, qui sont enregistrées sur une mémoire de données du débitmètre à ultrasons, de l'ordinateur, ou qui peuvent être appelées à partir d'un serveur.

10. Procédé selon la revendication 8, **caractérisé en ce que** la comparaison comprend une interpolation des données de mesure, si tant est que les conditions de mesure enregistrées dans les séries de mesure ne sont pas entièrement corrélées avec les informations transmises.

11. Procédé selon l'une des revendications précédentes, **caractérisé en ce que** le type d'élément de tube (6a-6d) à l'origine du défaut est sélectionné à partir du groupe suivant : raccord coudé, notamment coudé à 90° et coude hors plan, pompes, éléments capteurs, vannes, rétrécissements et/ou évasements de tube.

12. Débitmètre à ultrasons Clamp-On comprenant :

   - une unité d'exploitation (11, 21) ;

   **caractérisé en ce que** deux paires de convertisseurs à ultrasons (12-15, 22-25) sont disposées sur un tube (5, 16, 26) et forment un arrangement à une traverse et à deux chemins à 180° ou à deux traverses et à deux chemins à 90°, et
   **en ce que** l'unité d'exploitation (11, 21) est conçue pour la détermination d'un débit compensé et/ou d'une vitesse d'écoulement compensée au moyen d'un procédé selon l'une des revendications 1 à 11.

EP 3 008 427 B1

Fig. 1

Fig. 2

19

Fig. 3

Fig. 4a

Fig. 4b

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009055119 A1
- DE 19717940 A1
- US 20090055119 A1
- US 20030131667 A1
- US 5987997 A
- WO 2013164805 A1
- EP 2228631 A1
- WO 0149182 A2